(19) Europäisches Patentamt
European Patent Office
Office européen des brevets

(11) **EP 2 590 381 B1**

(12) **EUROPEAN PATENT SPECIFICATION**

(45) Date of publication and mention
of the grant of the patent:
**26.03.2014 Bulletin 2014/13**

(51) Int Cl.:
*H04L 29/06* (2006.01)    *H04W 28/02* (2009.01)
*H04B 7/04* (2006.01)    *H04B 7/06* (2006.01)

(21) Application number: **12191305.7**

(22) Date of filing: **05.11.2012**

(54) **Data transmission method and mobile communication device for adjusting a TCP/IP window size based on physical layer characteristics**

Datenübertragungsverfahren und Mobilkommunikationsvorrichtung zum Einstellen einer TCP/IP-Fenstergröße auf Grundlage von Eigenschaften der physikalischen Schicht

Procédé de transmission de données et dispositif de communication mobile pour régler une taille de fenêtre TCP/IP sur la base de caractéristiques de la couche physique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.11.2011 US 201113290132**
**03.04.2012 US 201261619839 P**
**04.05.2012 US 201261642660 P**
**01.11.2012 US 201213666550**

(43) Date of publication of application:
**08.05.2013 Bulletin 2013/19**

(73) Proprietor: **Acer Incorporated**
**Taipei Hsien 221 (TW)**

(72) Inventor: **Cheng, Tsung-Yo**
**221 Hsichih, Taipei Hsien (TW)**

(74) Representative: **2K Patentanwälte Blasberg Kewitz & Reichel**
**Partnerschaft**
**Schumannstrasse 27**
**60325 Frankfurt am Main (DE)**

(56) References cited:
**KR-A- 20070 099 095    US-A1- 2002 122 385**
**US-A1- 2008 085 717**

• **FENGYUAN REN ET AL: "Modeling and Improving TCP Performance over Cellular Link with Variable Bandwidth", IEEE TRANSACTIONS ON MOBILE COMPUTING, IEEE SERVICE CENTER, LOS ALAMITOS, CA, US, vol. 10, no. 8, 1 August 2011 (2011-08-01) , pages 1057-1070, XP011368901, ISSN: 1536-1233, DOI: 10.1109/TMC.2010.234**

**Description**

BACKGROUND OF THE INVENTION

FIELD OF THE INVENTION

The invention generally relates to data throughput control, and more particularly, to a mobile communication device and a method for improving data throughput by dynamically adjusting a window size of a communication protocol layer.

DESCRIPTION OF THE RELATED ART

With rapid development in technology, a user may easily connect to a network using desktop computers, notebook computers, Personal Digital Assistants (PDAs) or smart phones. In order for electronic equipment having varying specifications to be able to communicate with the same network, an OSI (Open Systems Interconnection) network model has been provided by the ISO (International Organization for Standardization) for managing the network intercommunication between two systems.

In a network environment in compliance with the OSI model, each layer of a receiving device or a transmitting device is configured to recognize data from the same layer. Data packets are sequentially transmitted from the top layer to the bottom layer of a transmitting network device and then transmitted to a receiving network device using application programs. After receiving data packages, the receiving network device sequentially unpacks each data package, which is then distributed to a corresponding layer thereof. Note that each layer may have varying transmission parameters and buffer sizes for their respective processing tasks. However, data stall may occur when data is being transmitted from a faster higher layer to a slower lower layer. Meanwhile, a faster lower layer may not improve overall data throughput, if a higher layer encounters an insufficient data buffer or transmission blockages.

In a relevant prior art, KR 2007/0099095 A (SK TELECOM CO LTD[KR]), published on 9 October, 2007, a method for changing a Transmission Control Protocol (TCP) window size is provided to present an unnecessary data retransmission phenomenon by considering a signal intensity form a mobile communication network. Specifically, the method comprises steps S101 to S109. In step S101, a mobile terminal receives an electric field signal, which is received from a mobile communication network. In steps S103 and S105, the electric field signal is compared with a TCP window size changing condition, and whether the TCP window size is to be changed is determined. In step S107, the TCP window size is determined according to the predetermined condition. In step S109, the changed TCP window size is transmitted to the wireless communication network, such that a transmission window size is variably changed according to the transmitted TCP window size.

BRIEF SUMMARY OF THE INVENTION

Thus, the invention proposes solutions for resolving the aforementioned problems to improve overall data throughput for a mobile communication device, such as a User Equipment (UE), Mobile Station (MS), Mobile Terminal (MT), or others.

In one aspect of the invention, a mobile communication device according to the subject-matter of independent Claim 1 is provided.

In another aspect of the invention, a data transmission method for a mobile communication device according to the subject-matter of independent Claim 6 is provided.

Other aspects and features of the invention will become apparent to those with ordinary skill in the art upon review of the following descriptions of specific embodiments of the mobile communication devices and data transmission methods.

BRIEF DESCRIPTION OF DRAWINGS

The invention can be more fully understood by reading the subsequent detailed description and examples with references made to the accompanying drawings, wherein:

Fig. 1 is a block diagram illustrating a network environment according to an embodiment of the invention;
Fig. 2 is a block diagram illustrating a multi-layer protocol stack in compliance with the OSI model according to an embodiment of the invention;
Fig. 3 is an exemplary diagram illustrating the mapping relations between the OSI-model protocol stack and the LTE protocol stack according to an embodiment of the invention;

Fig. 4 is a flow chart illustrating the data transmission method according to an embodiment of the invention;

Fig. 5 is a schematic diagram illustrating the processing between the higher layer and the lower layer in a mobile communication device for downlink data transmission according to the invention; and

Fig. 6 is a schematic diagram illustrating the processing between the higher layer and the lower layer in a mobile communication device for uplink data transmission according to the invention.

## DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

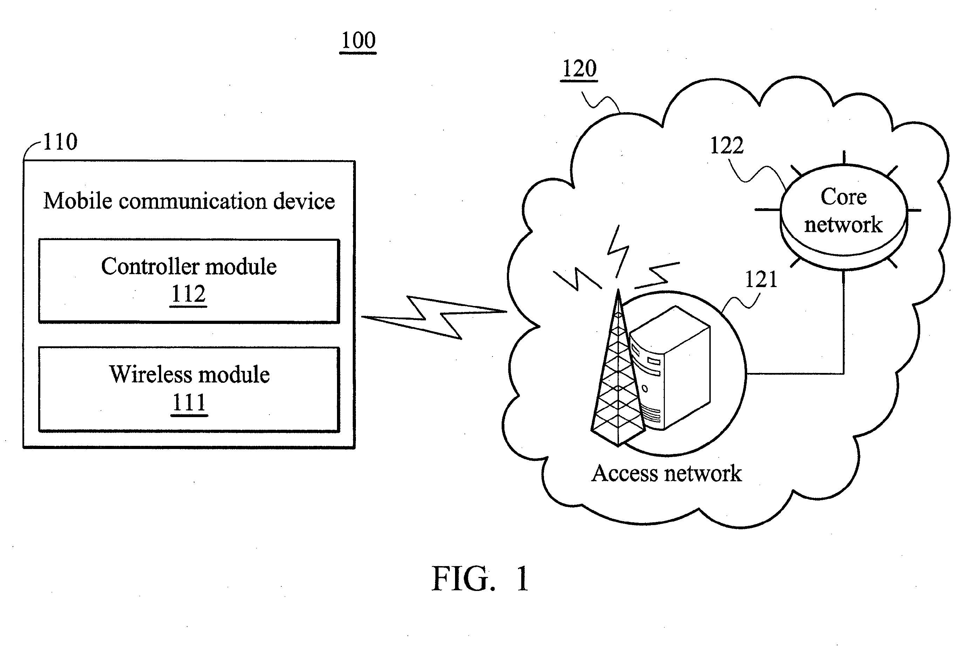

Fig. 1 is a block diagram illustrating a network environment according to an embodiment of the invention. In the network environment 100, the mobile communication device 110 is wirelessly connected to the service network 120 via the air interface for obtaining wireless services. The service network 120 comprises at least one cellular access network 121 and the core network 122. In general, the cellular access network 121 is controlled by the core network 122 to provide the functionality of wireless transceiving, and the cellular access network 121 may comprise one or more cellular stations, such as base stations, Node-Bs, or evolved Node-B (eNB), depending on the radio access technology in use. Although not shown, the core network 122 may further enable interfacing with external networks, such as the Public Switched Telephone Network (PSTN), which is called the Circuit Switched (CS) domain functionality, and/or interfacing with the Internet Protocol (IP) based Network, such as the Internet, which is called the Packet Switched (PS) domain functionality.

The mobile communication device 110 comprises a wireless module 111 and a controller module 112, wherein the wireless module 111 is configured to perform the functionality of wireless transceiving and the controller module 112 is configured to control the operation of the wireless module 111. To further clarify, the wireless module 111 may be a Radio Frequency (RF) unit (not shown), and the controller module 112 may be a general-purpose processor or Micro-Control Unit (MCU) of a baseband unit (not shown). The baseband unit may contain multiple hardware devices to perform baseband signal processing, including analog to digital conversion (ADC)/digital to analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the wireless communications system, wherein the radio frequency may be 900MHz, 2100MHz, or 2.6GHz utilized in Long Term Evolution (LTE) or LTE-Advanced technology, or others depending on the radio access technology in use. Although not shown, the mobile communication device 110 may further comprise other functional components, such as a display unit and/or keypad serving as the Man-Machine Interface (MMI), a storage unit storing the program codes of applications, or others.

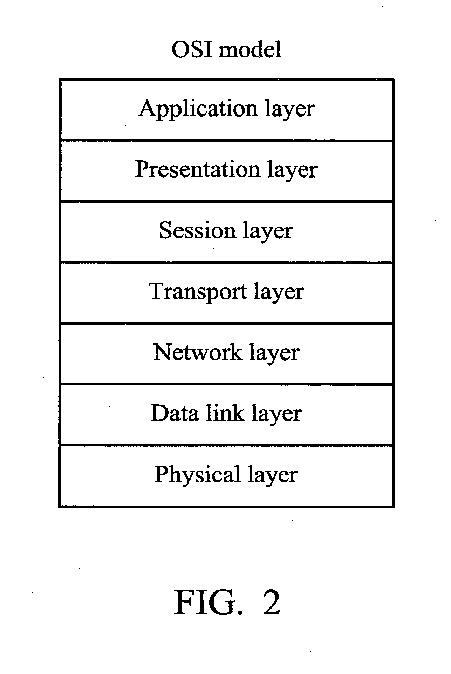

Fig. 2 is a block diagram illustrating a multi-layer protocol stack in compliance with the OSI model according to an embodiment of the invention. From bottom to top, Layer 1~Layer 7 sequentially include a physical layer, data link layer, network layer, transport layer, session layer, presentation layer, and application layer. The physical layer is defined as the bottom layer closest to the hardware devices, while the application layer is defined as the top layer closest to the software programs. In general, Layers 1 through 3 deal with network access and Layers 4 through 7 deal with end-to-end communications between the message source and the message destination. Each layer includes at least one function that is contained between an upper and a lower logical boundary. The services of each layer are combined with the services of the lower layers to create new services that are made available to the higher layers.

Specifically, the physical layer and the data link layer in the OSI model are configured to handle network hardware connection and may be implemented on various network access interfaces, such as Ethernet, Token-Ring or Fiber Distributed Data Interface (FDDI), etc. The network layer in the OSI model is configured to deliver messages between a transmitting device and a receiving device using various protocols, such as identifying addresses or selecting transmission paths using Internet Protocol (IP), Address Resolution Protocol (ARP), Reverse Address Resolution Protocol (RARP), or Internet Control Message Protocol (ICMP). The transport layer in the OSI model is configured to deliver messages between different hosts using Transmission Control Protocol (TCP) and User Datagram Protocol (UDP). The session layer, the presentation layer, and the application layer in the OSI model are configured to provide various application protocols, such as TELNET, FTP, SMTP, POP3, SNMP, NNTP, DNS, NIS, NFS, and HTTP. The present invention may be applied to any wireless network system having a multi-layer structure of protocol layers for data transmission.

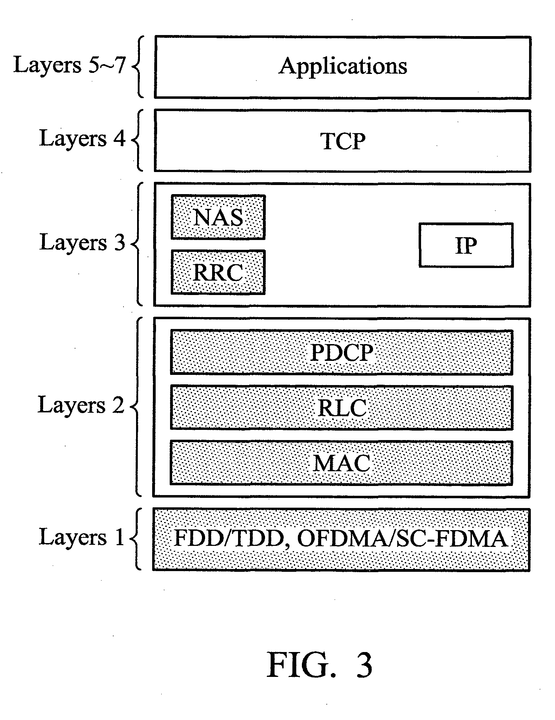

Note that, in the OSI model, various wireless communication standards, such as WiFi, GSM/GPRS, WCDMA, CDMA2000, LTE, and LTE-Advanced, etc., may be employed to enable signaling and communication between a transmitter and a receiver through the network layer. Fig. 3 is an exemplary diagram illustrating the mapping relations between the OSI-model protocol stack and the LTE protocol stack according to an embodiment of the invention. As shown in Fig. 3, the physical layer in the OSI model is replaced with the LTE Layer 1 which provides radio access using the Frequency-Division Duplexing/Time-Division Duplexing (FDD/TDD) or Orthogonal Frequency Division Multiplexing/Single-Carrier Frequency-Division Multiple Access (OFDMA/SC-FDMA) technology. The data link layer in the OSI model is replaced with the LTE Layer 2 which comprises the sub-layers Medium Access Control (MAC), Radio Link Control (RLC), and Packet Data Convergence Protocol (PDCP). The network layer in the OSI model is partially replaced with the LTE sub-layers Radio Resource Control (RRC) and Non-Access Stratum (NAS). In addition to the LTE sub-layers RRC and NAS, the network layer also comprises an entity which adopts IP for handling addressing, routing, service type specification, packet fragmentation, packet reassembling and security. The transport layer in the OSI model adopts TCP for handling packet sequence numbers, acknowledgement packets, checksums and re-transmissions. The session layer, the presentation layer, and the application layer in the OSI model are configured to provide application protocols.

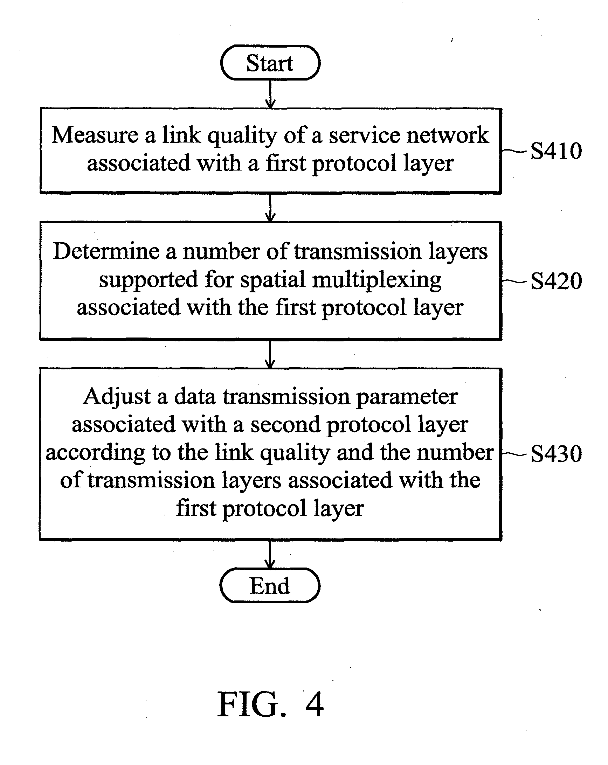

Fig. 4 is a flow chart illustrating the data transmission method according to an embodiment of the invention. The data transmission method may be applied in a mobile communication device, such as the mobile communication device 110, for dynamically adjusting a window size of a communication protocol layer to improve data throughput. To begin, the mobile communication device measures a link quality of a service network associated with a first protocol layer (step 410). Next, the mobile communication device determines a number of transmission layers supported for spatial multiplexing associated with the first protocol layer (step S420). After that, the mobile communication device adjusts a data transmission parameter associated with a second protocol layer according to the link quality and the number of transmission layers associated with the first protocol layer (step S430). Specifically, the second protocol layer is hierarchically higher than the first protocol layer in a multi-layer protocol stack. Note that, the data transmission parameter may be applied for downlink data transmission, or uplink data transmission, or both downlink and uplink data transmissions.

For the embodiment of Fig. 3, the link quality in step S410 may be a Channel Quality Indicator (CQI) of a downward transmission link from the service network, and the number of transmission layers in step S420 may be a Rank Indicator (RI) used in Multiple-Input Multiple-Output (MIMO), while the first protocol layer may be the physical layer in the LTE protocol stack. The data transmission parameter in step S430 may be a TCP/IP window size, while the second protocol layer may be the network layer or the transport layer in the OSI-model protocol stack which has the lower three layers replaced with the LTE protocol stack. For example, in step S420, if a 2x2 MIMO is employed, the RI equals to 2, or else, if MIMO is not employed, the RI equals to 1. Specifically, in step S430, the data transmission parameter may be adjusted by applying the following formula:

$$\left(MaxTCPWindowSize - MinTCPWindowSize\right) \times \frac{CQI\_Indexed\_TBS}{MAX\_CQI\_TBS} \div RI \times Weight$$

wherein *MaxTCPWindowSize* represents the maximum TCP/IP window size, *MinTCPWindowSize* represents the minimum TCP/IP window size, *CQI_Indexed_TBS* represents a Transport Block Size (TBS) corresponding to the measured CQI, *MAX_CQI_TBS* represents another TBS corresponding to the maximum CQI, and *Weight* represents a constant or a weighting function of the TBS corresponding to the measured CQI.

Specifically, the maximum CQI may be determined according to the Table 7.2.3-1 specified in the 3GPP TS 36.213 specification, and the TBS corresponding to the measured CQI and the TBS corresponding to the maximum CQI may be determined by looking up the Tables 7.1.7.1-1 and 7.1.7.2.1-1 specified in the 3GPP TS 36.213 specification, wherein the Tables 7.1.7.1-1 and 7.1.7.2.1-1 describe the mapping relations between the Modulation and Coding Scheme (MCS) index and TBS index. If *Weight* is a weighting function of the measured CQI, the weighting function may be a linear function, a non-linear function, or a discrete function, as long as the weighting function keeps the measured CQI and the TCP/IP window size in positive correlation.

It is to be understood that, the CQI and the TCP/IP window size are merely illustrative embodiments, and other parameters associated with link quality and data transmission rates may be used instead, and the invention is not limited thereto. Likewise, the LTE protocol stack is merely an illustrative embodiment, and other wireless communications protocol may be used instead to replace the lower layers in the OSI model.

To clearly illustrate the advantages of the invention, the following description is given using the TCP/IP window size as an example of the data transmission parameter in step S430. As known in the art, the concept of a sliding window is used in TCP/IP for allowing multiple packets to be transmitted before a receiving device accepts acknowledgement packets. This kind of multi-transmission-multi-acknowledgement technology can increase network bandwidth utilization and the data transmission speed. Simply speaking, a receiving device may inform a transmitting device of the available buffer size for receiving packets using the TCP/IP window size. The transmitting device may decrease its data throughput when the TCP/IP window size drops, or increase its data throughput when the TCP/IP window size rises. Therefore, the invention may improve data throughput by dynamically adjusting the TCP/IP window size in the higher protocol layer, e.g., the network/transport layer, according to the link quality and number of transmission layers supported for spatial multiplexing obtained by the lower protocol layer, e.g., the physical layer.

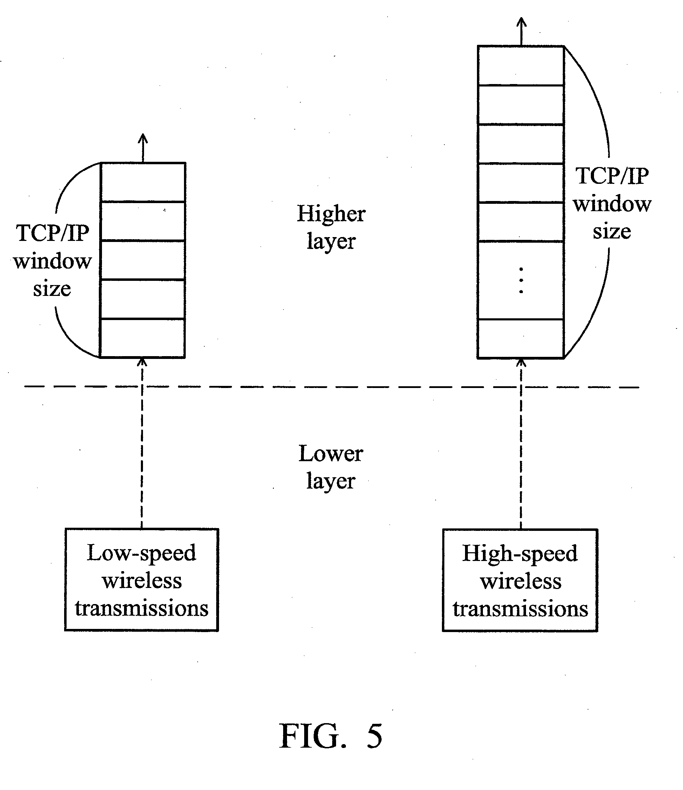

Fig. 5 is a schematic diagram illustrating the processing between the higher layer and the lower layer in a mobile communication device for downlink data transmission according to the invention. As shown at the left side of Fig. 5, a scenario is depicted where a bad link quality, i.e., small CQI value, is measured and/or the number of transmission layers supported for spatial multiplexing is small, i.e., small RI value, in the lower layer, indicating that the lower layer can only provide low-speed wireless transmissions. Conventionally, the higher layer does not take the link quality and the number of transmission layers supported for spatial multiplexing obtained by the lower layer into account for determining the TCP/IP window size, and waste of power consumption and data stall may occur if the higher layer determines to use a large TCP/IP window size for high speed data transmission. Advantageously, for this scenario, the invention allows the higher layer to dynamically reduce the TCP/IP window size, so that power consumption may be saved and overall data throughput may be improved.

As shown at the right side of Fig. 5, another scenario is depicted where a good/fair link quality, i.e., large CQI value, is measured and/or the number of transmission layers supported for spatial multiplexing is large, i.e., large RI value, in the lower layer, indicating that the lower layer can provide high-speed wireless transmissions. Conventionally, the higher layer may determine to use a small TCP/IP window size for low speed data transmission while the lower layer may provide high-speed wireless transmissions. Advantageously, for this scenario, the invention allows the higher layer to dynamically increase the TCP/IP window size, so that overall data throughput may be improved.

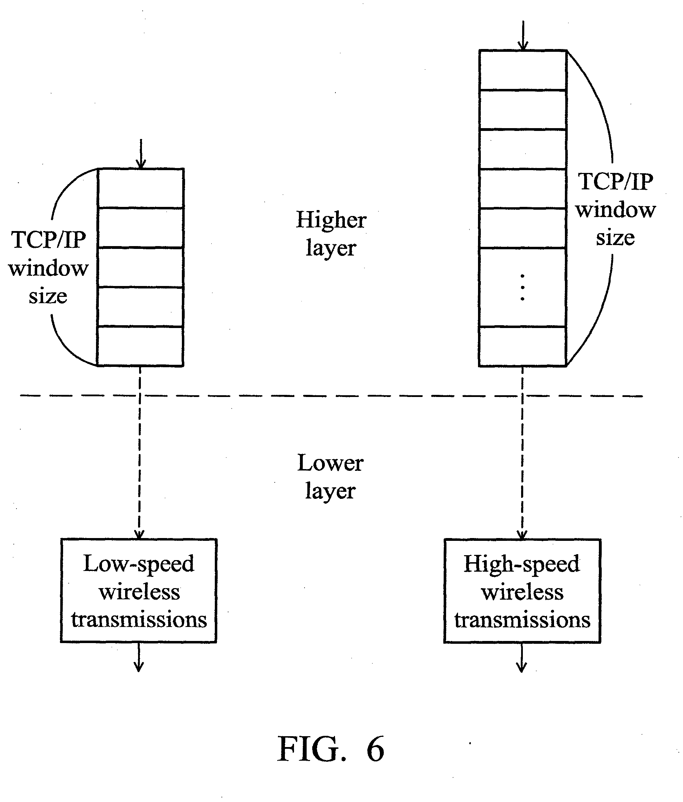

Similarly, Fig. 6 is a schematic diagram illustrating the processing between the higher layer and the lower layer in a mobile communication device for uplink data transmission according to the invention. As shown at the left side of Fig. 6, a scenario is depicted where a bad link quality, i.e., small CQI value, is measured and/or the number of transmission layers supported for spatial multiplexing is small, i.e., small RI value, in the lower layer, and correspondingly, the higher layer dynamically reduces the TCP/IP window size. As shown at the right side of Fig. 6, another scenario is depicted where a good/fair link quality, i.e., large CQI value, is measured and/or the number of transmission layers supported for spatial multiplexing is large, i.e., large RI value, in the lower layer, indicating that the lower layer can provide high-speed wireless transmissions, and correspondingly, the higher layer dynamically increases the TCP/IP window size. Thus, the overall data throughput for downlink data transmission may be improved.

While the invention has been described by way of example and in terms of preferred embodiment, it is to be understood that the invention is not limited thereto. Those who are skilled in this technology can still make various alterations and modifications without departing from the scope of this invention. Therefore, the scope of the invention shall be defined and protected by the following claims.

**Claims**

1. A mobile communication device (110), comprising:

   a wireless module (111), adapted to perform wireless transceiving to and from a service network (120) using a "Long Term Evolution LTE" technology; and
   a controller module (112);

   **characterized by**:

   wherein the controller module (112) is adapted to measure a link quality of the service network (120) associated with a Physical layer via the wireless module (111)to determine a number of transmission layers supported for spatial multiplexing associated with the Physical layer, and to adjust a data transmission parameter associated with a second protocol layer according to the link quality and the number of transmission layers associated with the Physical layer, and
   wherein the second protocol layer is hierarchically higher than the Physical layer in a multi-layer protocol stack of the LTE technology.

2. The mobile communication device (110) of claim 1, wherein the data transmission parameter is a "Transmission Control Protocol TCP" or "Internet Protocol IP" window size, and the second protocol layer is a Transport layer or Network layer in the multi-layer protocol stack.

3. The mobile communication device (110) of claim 2, wherein the link quality is a "Channel Quality Indicator CQI" of a downward transmission link from the service network (120), and the number of transmission layers is a "Rank Indicator RI" used for "Multiple-Input Multiple-Output MIMO".

4. The mobile communication device (110) of claim 3, wherein the adjusted data transmission parameter equals to:

$$(MaxTCPWindowSize - MinTCPWindowSize) \times \frac{CQI\_Indexed\_TBS}{MAX\_CQI\_TBS} + RI \times Weight$$

wherein the *MaxTCPWindowSize* represents a maximum TCP/IP window size, the *MinTCPWindowSize* represents a minimum TCP/IP window size, the *CQI_Indexed_TBS* represents a "Transport Block Size TBS" corresponding to the measured CQI, the *MAX_CQI_TBS* represents another TBS corresponding to a maximum CQI, and the *Weight* represents a constant or a weighting function of the measured CQI.

5. The mobile communication device (110) of one the preceding claims, wherein the data transmission parameter is applied for downlink data transmission, or uplink data transmission, or both downlink and uplink data transmissions.

6. A data transmission method for a mobile communication device (110) wirelessly connected to a service network (120) using a "Long Term Evolution LTE" technology according to a multi-layer protocol stack, the data transmission method being **characterized by** comprising the steps of

measuring, by the mobile communication device (110), a link quality of the service network (120) associated with a Physical layer;
determining, by the mobile communication device (110), a number of transmission layers supported for spatial multiplexing associated with the Physical layer; and
adjusting, by the mobile communication device (110), a data transmission parameter associated with a second protocol layer according to the link quality and the number of transmission layers associated with the Physical layer,
wherein the second protocol layer is hierarchically higher than the Physical layer in the multi-layer protocol stack of the LTE technology.

7. The data transmission method of claim 6, wherein the data transmission parameter is a Transmission Control Protocol TCP" or Internet Protocol IP" window size, and the second protocol layer is a Transport layer or Network layer in the multi-layer protocol stack.

8. The data transmission method of claim 7, wherein the link quality is a "Channel Quality Indicator CQT" of a downward transmission link from the service network (120), and the number of transmission layers is a "Rank Indicator RI" used for "Multiple-Input Multiple-Output MIMO".

9. The data transmission method of claim 8, wherein the adjusted data transmission parameter equals to:

$$(MaxTCPWindowSize - MinTCPWindowSize) \times \frac{CQI\_Indexed\_TBS}{MAX\_CQI\_TBS} \div RI \times Weight$$

wherein the *MaxTCPWindowSize* represents a maximum TCP/IP window size, the *MinTCPWindowSize* represents a minimum TCP/IP window size, the *CQI_Indexed_TBS* represents a "Transport Block Size TBS" corresponding to the measured CQI, the *MAX_CQI_TBS* represents another TBS corresponding to a maximum CQI, and the *Weight* represents a constant or a weighting function of the measured CQI.

10. The data transmission method of one of claims 8-9, wherein the data transmission parameter is applied for downlink data transmission, or uplink data transmission, or both downlink and uplink data transmissions.

**Patentansprüche**

1. Mobilkommunikations-Vorrichtung (110), umfassend:

   ein drahtloses Modul (111), das angepasst ist, um drahtlosen Sende-Empfang zu und von einem Dienste-Netzwerk (120) unter Verwendung der "Long Term Evolution LTE"-Technologie durchzuführen, und
   ein Steuerungsmodul (112);

   **gekennzeichnet dadurch, dass**:

   das Steuermodul (112) angepasst ist, um eine Verbindungsqualität des Dienste-Netzwerks (120), das einer physikalischen Schicht zugeordnet ist, über das drahtlose Modul zu messen (111), um eine Anzahl von Übertragungsschichten, die räumliches Multiplexen unterstützen und der physikalischen Schicht zugeordnet sind, zu bestimmen, und um einen Datenübertragungs-Parameter, der einer zweiten Protokollschicht zugeordnet ist, gemäß der Verbindungsqualität und der Anzahl der Übertragungsschichten, die der physikalischen Schicht zugeordnet sind, einzustellen, und
   wobei die zweite Protokollschicht hierarchisch höher liegt als die physikalische Schicht innerhalb eines Mehrschichten-Protokollstapels der LTE - Technologie.

2. Mobilkommunikations-Vorrichtung (110) nach Anspruch 1, wobei der Datenübertragungs-Parameter eine "Transmission Control Protocol TCP " oder "Internet Protocol IP" -Fenstergröße ist, und wobei die zweite Protokollschicht eine Transportschicht oder Netzwerkschicht innerhalb des Mehrschichten-Protokollstapels ist.

3. Mobilkommunikations-Vorrichtung (110) nach Anspruch 2, wobei die Verbindungsqualität ein "Kanal-Qualitätsindikator CQI" einer Abwärts-Übertragungsstrecke des Dienste-Netzwerks (120) ist, und wobei die Anzahl der Übertragungsschichten ein "Rank Indicator RI" ist, der für "Multiple-Input Multiple-Output -MIMO" verwendet wird.

4. Mobilkommunikations-Vorrichtung (110) nach Anspruch 3, wobei der eingestellte Datenübertragungs-Parameter gleich ist mit:

$$(MaxTCPWindowSize - MinTCPWindowSize) \times \frac{CQI\_Indexed\_TBS}{MAX\_CQI\_TBS} \div RI \times Weight$$

   wobei die MaxTCPWindowSize eine maximale TCP / IP -Fenstergröße angibt, die MinTCPWindowSize eine Mindest TCP / IP -Fenstergröße angibt, die CQI_Indexed_TBS eine "Transport-Blockgröße TBS" angibt entsprechend dem gemessenen CQI, und die MAX_CQI_TBS eine weitere TBS angibt entsprechend einem maximalen CQI, und wobei das *Weight* eine konstante angibt oder eine Wichtungsfunktion des gemessenen CQI angibt.

5. Mobilkommunikations-Vorrichtung (110) nach einem der vorhergehenden Ansprüche, wobei der Datenübertragungs-Parameter für die Abwärts-Datenübertragung oder die Aufwärts-Datenübertragung oder für beides, die Abwärts- und Aufwärts- Datenübertragungen, verwendet wird.

6. Datenübertragungs-Verfahren für eine Mobilekommunikations-Vorrichtung (110), die drahtlos mit einem Dienste-Netzwerk (120) verbunden ist, das eine "Long Term Evolution LTE"-Technologie verwendet gemäß einem Mehrschichten-Protokollstapel, wobei das Datenübertragungs-Verfahren **gekennzeichnet ist durch** die Schritte:

   Messen, **durch** die Mobilkommunikations-Vorrichtung (110), einer Verbindungsqualität des Dienste-Netzwerks (120), das einer physischen Schicht zugeordnet ist;
   Bestimmen, **durch** die Mobilkommunikations-Vorrichtung (110), einer Anzahl von Übertragungsschichten, die räumliches Multiplexen unterstützen und der physikalischen Schicht zugeordnet sind;
   Einstellen, **durch** die Mobilkommunikations-Vorrichtung (110), eines Datenübertragungs-Parameters der einer zweiten Protokollschicht zugeordnet ist, gemäß der Verbindungsqualität und der Anzahl der Übertragungsschichten, die der physikalischen Schicht zugeordnet sind;
   wobei die zweite Protokollschicht hierarchisch höher liegt als die physikalische Schicht innerhalb eines Mehrschichten-Protokollstapels der LTE - Technologie.

7. Datenübertragungs-Verfahren nach Anspruch 6, wobei der Datenübertragungs-Parameter eine "Transmission Control Protocol TCP " oder "Internet Protocol IP" -Fenstergröße ist, und wobei die zweite Protokollschicht eine Transportschicht oder Netzwerkschicht innerhalb des Mehrschichten-Protokollstapels ist.

8. Datenübertragungs-Verfahren nach Anspruch 7, wobei die Verbindungsqualität ein " Kanal-Qualitätsindikator CQI" einer Abwärts-Übertragungsstrecke des Dienste-Netzwerks (120) ist, und wobei die Anzahl der Übertragungsschichten ein "Rank Indicator RI " ist, der für " Multiple-Input Multiple-Output -MIMO" verwendet wird.

9. Datenübertragungs-Verfahren nach Anspruch 8, wobei der eingestellte Datenübertragungs-Parameter gleich ist mit:

$$(MaxTCPWindowSize - MinTCPWindowSize) \times \frac{CQI\_Indexed\_TBS}{MAX\_CQI\_TBS} + RI \times Weight$$

wobei die MaxTCPWindowSize eine maximale TCP / IP -Ferzstergröe angibt, die MinTCPWindowSize eine Mindest TCP / IP -Fenstergröße angibt, die CQI_Indexed-TBS eine "Transport-Blockgröße TBS" angibt entsprechend dem gemessenen CQI, und die MAX_CQI_TBS eine weitere TBS angibt entsprechend einem maximalen CQI, und wobei das *Weight* eine konstante angibt oder eine Wichtungsfunktion des gemessenen CQI angibt.

10. Datenübertragungs-Verfahren nach einem der Ansprüche 8-9, wobei der Datenübertragungs-Parameter für die Abwärts-Datenübertragung oder die Aufwärts- Datenübertragung oder für beides, die Abwärts- und Aufwärts-Datenübertragungen, verwendet wird.

**Revendications**

1. Un dispositif de communication mobile (110), comprenant :

un module sans fil (111), adapté pour une réception sans fil avec un réseau de service (120) utilisant la technologie « *Long Term Evolution LTE* », et
un module de commande (112) ;
**caractérisé par le fait que** :

le module de commande (112) est adapté pour mesure une qualité de lien du réseau de service (120) associée à une couche Physique via le module sans fil (111) pour déterminer un nombre de couches de transmission supporté pour un multiplexage spatial associé à la couche Physique, et pour régler un paramètre de transmission de données associé à une seconde couche de protocole en fonction de la qualité de lien et du nombre de couches de transmission associées à la couche Physique, et
dans lequel la seconde couche de protocole est hiérarchiquement plus élevée que la couche Physique au sein d'une pile de protocoles multicouche de la technologie LTE.

2. Le dispositif de communication mobile (110) de la revendication 1, dans lequel le paramètre de transmission de donnée est la taille de la fenêtre *« Transmission Control Protocol TCP »* ou *« Internet Protocol IP»,* et la seconde couche de protocole est une couche Transport ou une couche Réseau au sein de la pile de protocole multicouches.

3. Le dispositif de communication mobile (110) de la revendication 2, dans lequel la qualité de lien est *« Indicateur de Qualité de Canal CQI »* d'un lien de transmission descendant du réseau de service (120), et le nombre de couches de transmission est *« Indicateur de rang RI »* utilisé pour « *Multiples entrées et Mutiples sorties MIMO »*.

4. Le dispositif de communication mobile (110) de la revendication 3, dans lequel le paramètre de transmission de données réglé est égal à

$$(MaxTCPWindowSize - MinTCPWindowSize) \times \frac{CQI\_Indexed\_TBS}{MAX\_CQI\_TBS} + RI \times Weight$$

où *MaxTCPWindowSize* représente une taille de fenêtre TCP/IP maximale, *MinTCPWindowSize* représente une taille de fenêtré TCP/IP minimale, *CQI_Indexed_TBS* représente une *«taille de Bloc de Transport TBS »* correspondant au CQI mesuré, *MAX_CQI_TBS* représente un autre TBS correspondant à un CQI maximum, et le *Weight* représente une constante ou une fonction de poids du COI mesuré.

5. Le dispositif de communication mobile (110) de l'une des revendications précédentes, dans lequel le paramètre de transmission de données est appliqué pour une transmission de données descendante, ou une transmission de données montante, ou pour des transmissions de données montantes et descendantes.

6. Un procédé de transmission de données pour un dispositif de communication mobile (110) connecté sans fil à un réseau de service (120) utilisant la technologie *« Long Term Evolution LTE »* en fonction d'une pile de protocoles multicouches, le procédé de transmission étant **caractérisé par** les étapes :

la mesure, par le dispositif de communication mobile (110), d'une qualité de lien du réseau service (120) associé à une couche Physique ,
la détermination, par le dispositif de communication mobile (110), d'un nombre de couche de transmission supportées pour un multiplexage spatial associé à la couche Physique ; et
le réglage, par le dispositif de communication mobile (110), d'un paramètre de transmission de données associé à une seconde couche de protocole en fonction de la qualité de liens et du nombre de couches de transmission associées à la couche Physique,
dans lequel la seconde couche de protocole est hiérarchiquement plus élevée que la couche Physique au sein d'une pile de protocoles multicouche de la technologie LTE.

7. Le procédé de transmission de données de la revendication 6, dans lequel le paramètre de transmission de donnée est la taille de la fenêtre *« Transmissian Control Protocol TCP »* ou *« Internet Protocol IP »,* et la seconde couche de protocole est une couche Transport ou une couche Réseau au sein de la pile de protocole multicouches.

8. Le procédé de transmission de données de la revendication 7, dans lequel la qualité de lien est *« Indicateur de Qualité de Canal CQI »* d'un lien de transmission descendant du réseau de service (120) , et le nombre de couches de transmission est *« Indicateur de rang RI »* utilisé pour *« Multiples entrées et Mutiples sorties* MIMO *».*

9. Le procédé de transmission de données de la revendication 8, dans lequel le paramètre de transmission de données réglé est égal à

$$(MaxTCPWindowSize - MinTCPWindowSize) \times \frac{CQI\_Indexed\_TBS}{MAX\_CQI\_TBS} + RI \times Weight$$

où *MaxTCPWindowSize* représente une taille de fenêtre TCP/IP maximale, *MinTCPWindowSize* représente une taille de fenêtre TCP/IP minimale, *CQI_Indexed_TBS* représente une *« taille de Bloc de Transport TBS »* correspondant au CQI mesuré, *MAX_CQI_TBS* représente un autre TBS correspondant à un CQI maximum, et le *Weight* représente une constante ou une fonction de poids du CQI mesuré.

10. Le procédé de transmission de données de l'une des revendications 8 à 9, dans lequel le paramètre de transmission de données est appliqué pour une transmission de données descendante, ou une transmission de données montante, ou pour des transmissions de données montantes et descendantes.

## 100

### 120

### 110

```
┌─────────────────────────────────────┐
│  Mobile communication device        │
│  ┌───────────────────────────────┐  │
│  │     Controller module         │  │
│  │          112                  │  │
│  └───────────────────────────────┘  │
│  ┌───────────────────────────────┐  │
│  │     Wireless module           │  │
│  │          111                  │  │
│  └───────────────────────────────┘  │
└─────────────────────────────────────┘
```

122

Core network

121

Access network

## FIG. 1

EP 2 590 381 B1

OSI model

| |
| --- |
| Application layer |
| Presentation layer |
| Session layer |
| Transport layer |
| Network layer |
| Data link layer |
| Physical layer |

# FIG. 2

FIG. 3

Start

Measure a link quality of a service network associated with a first protocol layer —S410

Determine a number of transmission layers supported for spatial multiplexing associated with the first protocol layer —S420

Adjust a data transmission parameter associated with a second protocol layer according to the link quality and the number of transmission layers associated with the first protocol layer —S430

End

# FIG. 4

FIG. 5

TCP/IP
window
size

Higher
layer

TCP/IP
window
size

Lower
layer

Low-speed
wireless
transmissions

High-speed
wireless
transmissions

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20070099095 A